# FASCICULE DE BREVET EUROPEEN

(11) **EP 3 061 110 B1**
(45) Date de publication et mention de la délivrance du brevet: **04.10.2017**
(21) Numéro de dépôt: 14793887.2
(22) Date de dépôt: 16.10.2014
(51) Int. Cl.: H01H 9/54, H01H 71/74

(54) **DISJONCTEUR À DÉTECTION DE SECTION DE CÂBLE ÉLECTRIQUE ET PROCÉDÉ DE CONTRÔLE D'UN TEL DISJONCTEUR**
SCHUTZSCHALTER MIT DETEKTION EINES STROMKABELABSCHNITTES UND STEUERUNGSVERFAHREN FÜR SOLCH EINEN SCHUTZSCHALTER
ELECTRICAL CABLE SECTION DETECTION CIRCUIT BREAKER AND METHOD OF CONTROLLING SUCH A CIRCUIT BREAKER

(30) Priorité: 21.10.2013 FR 1360253
(43) Date de publication de la demande: 31.08.2016
(73) Titulaire: Electricité de France, 75008 Paris (FR)
(72) Inventeur: PIGNIER, Daniel, F-92340 Bourg La Reine (FR); MENGA, David, F-91370 Verrieres Le Buisson (FR)
(74) Mandataire: Cabinet Plasseraud
(86) Numéro de dépôt international: PCT/FR2014/052645
(87) Numéro de publication internationale: WO 2015/059390

(56) Documents cités:
- EP-A1- 0 119 187
- EP-A1- 1 841 033
- US-A1- 2008 204 947

## Description

### Domaine technique

L'invention concerne le domaine des installations électriques, et notamment des disjoncteurs électriques. L'invention propose en outre un procédé de contrôle de disjoncteurs électriques, en particulier pour réaliser une auto-calibration de disjoncteur.

### Etat de la technique

Dans un souci d'efficience énergétique et d'amélioration de la sécurité des installations électriques, des unités de gestion et de surveillance électriques peuvent être agencées au sein des installations, par exemple dans des logements ou bâtiments industrielles.

Ces unités de gestion sont généralement directement implantées sur le réseau électrique de l'installation et permettent de mettre en oeuvre des services de gestion des usages électriques et d'alerte en cas de défaillance. Le consommateur peut ainsi contrôler sa consommation et être prévenu d'éventuels dysfonctionnements.

Les unités de gestion sont souvent installées au niveau du tableau électrique du logement (point d'entrée de l'alimentation procurée par le fournisseur d'énergie électrique en amont du tableau). Les unités sont alors généralement agencées pour mesurer la consommation sur des départs électriques du tableau qui alimentent le réseau.

Ces départs électriques sont habituellement associés à un disjoncteur destiné à protéger une ligne électrique du réseau alimentée par ce départ. Les unités de gestion peuvent en outre être adaptées à détecter un déclenchement du disjoncteur afin notamment d'alerter le consommateur d'une défaillance électrique dans son logement.

Toutefois, lorsque le calibrage du disjoncteur n'est pas en adéquation avec les propriétés électriques de la ligne à protéger, le disjoncteur est susceptible de ne pas assurer une protection adéquate ou d'être déclenché de manière intempestive.

Si les unités de gestion peuvent être aptes à détecter une anomalie de fonctionnement de disjoncteur, elles ne sont en revanche pas prévues pour prévenir d'une telle anomalie, par exemple lors de l'installation des disjoncteurs dans le tableau. Le document "EP 0 119 187 A1" décrit un disjoncteur pour la protection d'au moins une ligne électrique comportant au moins un câble électrique.

### Résumé de l'invention

La présente invention vient améliorer la situation.

L'invention propose notamment de vérifier l'adéquation du calibrage d'un disjoncteur par rapport à des caractéristiques d'une ligne électrique à protéger, et en outre d'ajuster le calibrage du disjoncteur selon ces caractéristiques.

A cet effet, un premier aspect de l'invention concerne un disjoncteur pour la protection d'au moins une ligne électrique comportant au moins un câble électrique. Le disjoncteur proposé comporte au moins :
- un capteur de diamètre du câble électrique ; et
- une unité de traitement de données reliée au capteur de diamètre pour recevoir une valeur du diamètre.

En outre, l'unité de traitement est apte à vérifier que la valeur du diamètre est supérieure ou égale à une valeur limite déterminée à partir d'un courant assigné du disjoncteur.

On comprend par courant assigné la valeur maximum du courant que le disjoncteur peut supporter de manière permanente (correspondant au calibre du disjoncteur).

La détection de diamètre du câble électrique permet d'évaluer le dimensionnement du câble et de déterminer si les propriétés électriques d'un tel dimensionnement permettent de supporter l'intensité du courant assigné.

Cette vérification de la taille du diamètre peut notamment être réalisée lors de l'installation du disjoncteur par un opérateur. Ainsi, lorsque le diamètre détecté d'un câble électrique s'avère insuffisant par rapport à la taille nécessaire pour supporter une intensité maximale relative au calibre du disjoncteur (i.e. courant assigné), une alerte peut être émise pour prévenir l'opérateur que les caractéristiques du câble et du disjoncteur ne sont pas en adéquation.

L'opérateur prévenu peut alors modifier le câble et/ou le disjoncteur de sorte que la ligne électrique soit convenablement protégée une fois le disjoncteur installé. De fait avec une telle vérification du calibrage du disjoncteur par rapport aux caractéristiques de la ligne électrique à protéger, une installation électrique comprenant un tel disjoncteur est plus sûre.

Il convient de noter que la mesure du diamètre (qui peut être en millimètres par exemple) peut permettre de déterminer la section du câble électrique (en millimètres carrés typiquement) et de déterminer de fait les caractéristiques électriques du câble (et plus particulièrement l'intensité maximale que peut supporter le câble sans risque de dysfonctionnement).

Dans un mode de réalisation particulièrement avantageux, l'unité de traitement peut en outre être apte à déterminer, en fonction de la valeur du diamètre, au moins un premier seuil de déclenchement de coupure électrique de la ligne à protéger.

De cette manière, le disjoncteur peut être paramétré de sorte à ajuster son seuil de déclenchement en fonction de la section du câble électrique associé. Cet ajustement du seuil de déclenchement permet tout particulièrement d'éviter les déclenchements intempestifs causés habituellement lorsqu'un disjoncteur est d'un calibre inadéquat par rapport au dimensionnement du câble associé.

On entend par seuil de déclenchement un courant limite à partir duquel le disjoncteur, lorsqu'il est dans un état enclenché (circuit fermé), est passé dans un état déclenché (circuit ouvert). Ce courant limite peut par exemple être atteint lors de pics de consommation ou d'une surtension inhérente à un court-circuit.

Avantageusement, le disjoncteur peut comporter par ailleurs un capteur de courant adapté à mesurer un courant et une différence de potentiel sur la ligne électrique. L'unité de traitement est en outre apte à collecter des données issues du capteur de courant et à déterminer un deuxième seuil de déclenchement de coupure électrique en fonction des données collectées et de la valeur de diamètre du câble.

Dans ce mode de réalisation, le seuil de déclenchement du disjoncteur peut être ajusté en fonction des consommations électrique mesurées sur la ligne associée au disjoncteur, et ce dans la limite du diamètre du câble.

Le disjoncteur est dès lors automatiquement paramétré en fonction de :
- son calibre ;
- du diamètre du ou des câbles associés ;
- des usages électriques sur la ou les lignes électriques à protéger.

L'ajustement du seuil de déclenchement en fonction de la section du câble améliore la réactivité de déclenchement du disjoncteur. Cette réactivité améliorée permet notamment d'éviter toute surchauffe causée habituellement (notamment lors d'une charge électrique importante) sur la ligne à protéger lorsqu'un disjoncteur est d'un calibre inapproprié par rapport aux dimensionnements des câbles. Il convient donc de noter que la latence de déclenchement est sensiblement diminuée par le disjoncteur proposé et permet d'améliorer la protection électrique de la ligne.

Les ajustements du seuil de déclenchement du disjoncteur permettent ainsi d'adapter la sécurité électrique assurée par le disjoncteur en fonction de :
- la configuration de la portion de réseau électrique protégée par le disjoncteur (dimensionnement du câble associé) et
- des équipements branchés à cette portion (consommations mesurées des usages électriques).

Les seuils de déclenchement peuvent notamment être ajustés dynamiquement en fonction des usages électriques mesurés et ce dans les limites imposées par le dimensionnement du câble associé au disjoncteur.

Par ailleurs, il peut être détecté des erreurs d'installation tels que plusieurs câbles insérés dans le disjoncteur, chacun ayant une section différente.

De façon avantageuse, le disjoncteur peut comporter en outre au moins une mémoire adaptée à archiver des données collectées de chacun des capteurs.

Ainsi, les mesures de diamètre et de consommation relevées par les capteurs du disjoncteur sont conservées, notamment en vue d'être communiquées au consommateur, à un opérateur ou à une entité informatique distante. Les mesures stockées permettent de connaitre les évènements de consommation, d'installation ou de défaillance qui sont survenus au niveau du disjoncteur sur des périodes déterminées. A cet effet, les données de mesures issues des capteurs peuvent être horodatées.

Avantageusement, le disjoncteur peut comporter en outre au moins une interface de communication, l'unité de traitement étant adaptée à transmettre, sur requête, via l'interface de communication, la valeur du diamètre ou des données collectées par le ou les capteurs.

Selon cette réalisation, le disjoncteur peut transmettre les données de mesure des capteurs à une entité informatique distante par exemple, ou au consommateur (via une application sur un Smartphone typiquement). Ces données de mesure communiquées permettent notamment le déploiement de services de suivi des défaillances et des consommations électriques dans un logement. On note d'ailleurs qu'en étant réalisées en tête du réseau électrique (au niveau des départs du tableau électrique), les mesures en consommation effectuées par le disjoncteur permettent d'avoir une bonne exhaustivité des usages électriques sur les lignes associées.

En complément, l'unité de traitement peut être apte à déterminer le au moins un seuil de déclenchement de coupure électrique de la ligne à protéger en fonction d'une consigne de calibrage reçue via l'interface de communication.

Par exemple, le consommateur peut souhaiter changer les caractéristiques de son contrat, notamment en augmentant la puissance souscrite. Le fournisseur d'énergie électrique (ou une unité de gestion d'un tableau électrique comprenant le disjoncteur) envoie alors une consigne de calibrage au disjoncteur (en particulier au disjoncteur principal du tableau électrique). Le cas échéant, le seuil de déclenchement peut être augmenté, et ce sous réserve que le seuil n'excède pas les limites imposées par le dimensionnement du câble.

Ainsi, les caractéristiques de l'alimentation procurées par le fournisseur d'énergie peuvent évoluer, avec une auto-adaptation du calibrage du disjoncteur, sans risquer de défaillance de la protection assurée par le disjoncteur.

Selon une réalisation avantageuse, le disjoncteur peut être enclenché ou déclenché sur réception d'une consigne de pilotage reçue via l'interface de communication.

La consigne de pilotage peut notamment être envoyée par le consommateur via une application prévue à cet effet, pour contrôler sa consommation à distance par exemple ou réagir à une alerte reçue.

Avantageusement, le disjoncteur peut comporter en outre une unité d'alimentation électrique contrôlée par l'unité de traitement. L'unité d'alimentation électrique est adaptée pour :
- réguler une puissance électrique reçue, et
- alimenter la ligne électrique à protéger selon la puissance électrique régulée.

Ainsi, la puissance électrique délivrée peut être limitée par exemple en fonction du seuil de déclenchement déterminé, permettant d'adapter la puissance électrique délivrée au diamètre du câble en aval du disjoncteur.

Avantageusement, le disjoncteur peut comprendre un module électronique de surveillance du fonctionnement de l'unité de traitement. Ce module est notamment implémenté de sorte à déclencher le disjoncteur lorsque que ce dernier est détecté être hors service.

Il convient de noter qu'il est entendu par « déclencher » l'action de passer le disjoncteur de l'état enclenché (circuit fermé) à l'état déclenché (circuit ouvert).

Selon une réalisation avantageuse, l'unité de traitement peut être en outre adaptée pour :
- détecter des anomalies de fonctionnement à partir de la valeur de diamètre ou des données collectées ; et
- émettre une alerte.

Ainsi, un opérateur et/ou un consommateur peuvent être prévenus de la non adéquation du diamètre du câble électrique avec le calibre du disjoncteur, ou encore de dysfonctionnements survenus dans le réseau électrique du logement. Les alertes peuvent notamment indiquer la non-conformité de l'installation en précisant le potentiel défaut ayant généré l'alerte.

Selon une réalisation possible, le capteur de diamètre du câble est un dispositif laser.

Un deuxième aspect de l'invention concerne une installation électrique comprenant au moins un disjoncteur tel que le disjoncteur proposé ci-dessus. Une telle installation électrique peut par exemple être un tableau électrique d'un logement ou un réseau électrique de bâtiment industriel ou d'un établissement collectif (un hôtel ou un hôpital typiquement).

Selon un troisième aspect, l'invention concerne un procédé de contrôle d'un disjoncteur pour la protection d'au moins une ligne électrique comportant au moins un câble électrique. Le procédé est remarquable en ce qu'il comporte au moins les étapes de :
- collecte de données issues d'un capteur de diamètre du câble électrique ; et
- vérification que la valeur du diamètre est supérieure ou égale à une valeur limite déterminée à partir d'un courant assigné du disjoncteur.

Ce procédé permet dès la phase d'installation du disjoncteur, de pouvoir déterminer si le diamètre du câble convient au calibre du disjoncteur. Un signal (lumineux, sonore, ou une alerte) peut être émis pour prévenir l'installateur du résultat de la vérification effectuée.

Selon un mode de réalisation particulièrement avantageux, le procédé de contrôle peut comporter en outre une étape de détermination, en fonction de la valeur du diamètre, d'au moins un premier seuil de déclenchement de coupure électrique de la ligne à protéger.

Le procédé permet ainsi d'adapter automatiquement le niveau de déclenchement du disjoncteur au regard du diamètre de câble détecté.

En complément, le procédé peut comporter en outre les étapes de :
- collecte de données issues d'un capteur de courant mesurant un courant et une différence de potentiel sur la ligne électrique ; et
- détermination d'un deuxième seuil de déclenchement de coupure électrique en fonction des données collectées et de la valeur de diamètre du câble.

On comprend que le procédé permet en outre d'adapter automatiquement le niveau de déclenchement du disjoncteur au regard des consommations mesurées en aval du disjoncteur.

En complément, le procédé peut comporter une étape de détermination d'une plage de fonctionnement du disjoncteur, la plage de fonctionnement étant comprise entre :
- le premier seuil déterminé ; et
- le deuxième seuil déterminé.

Un seuil de déclenchement effectif est alors déterminé dans la plage de fonctionnement. Lorsqu'un seuil de déclenchement effectif est déterminé, le l'unité de traitement est implémenté pour déclencher le disjoncteur uniquement lorsque le courant supporté est supérieur au seuil effectif.

Avantageusement, le procédé peut comporter par ailleurs les étapes de :
- réception d'une consigne de calibrage via une interface de communication du disjoncteur ; et
- détermination du seuil de déclenchement de coupure électrique en fonction de la consigne de calibrage.

Selon cette réalisation, le ou les seuils déterminés parmi les premier et deuxième seuils et le seuil effectif peuvent être influencés par des consignes de calibrage envoyées par exemple par le fournisseur d'énergie électrique.

En complément, le procédé peut comporter en outre les étapes de :
- surveillance de la valeur et des données collectées pour détecter des anomalies de fonctionnement ; et
- émission d'une alerte en cas d'anomalie détectée.

Selon le procédé proposé, le seuil de déclenchement du disjoncteur peut être automatiquement ajusté aux caractéristiques électriques de la ligne à protéger (diamètre et consommation en particulier). Le procédé permet donc l'auto-calibration du disjoncteur en fonction de la configuration du réseau électrique en aval.

Selon un quatrième aspect, l'invention concerne en outre un programme informatique destiné à être stocké dans une mémoire du disjoncteur. Ce programme informatique est caractérisé en ce qu'il comporte des instructions lisibles par un processeur du disjoncteur, le processeur mettant en oeuvre le procédé de l'invention lorsque les instructions sont exécutées par le processeur.

### Brève description des figures

D'autres caractéristiques et avantages de l'invention apparaîtront à l'examen de la description détaillée ci-après, et des figures annexées sur lesquelles :
- la figure 1 représente un premier exemple de réalisation du disjoncteur selon l'invention ;
- la figure 2 représente un deuxième exemple de réalisation du disjoncteur ;
- la figure 3 représente un troisième exemple de réalisation du disjoncteur ;
- la figure 4 illustre un exemple d'installation électrique comprenant plusieurs disjoncteurs selon l'invention ;
- la figure 5 est un organigramme représentant un exemple de succession d'étapes du procédé de contrôle du disjoncteur selon l'invention.

Pour des raisons de clarté, les dimensions des différents éléments représentés sur ces figures ne sont pas nécessairement en proportion avec leurs dimensions réelles. Sur les figures, des références identiques correspondent à des éléments identiques pour les différents modes de réalisation exposés.

### Description détaillée

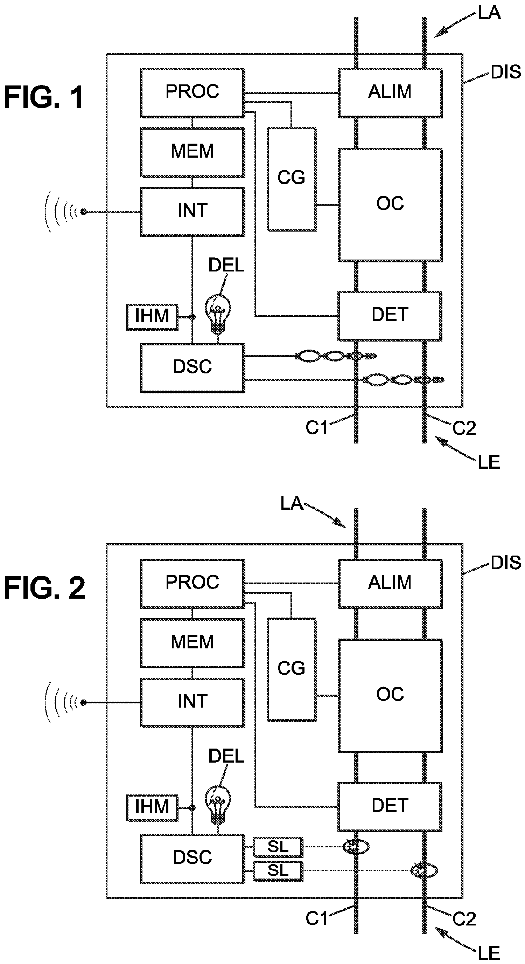

On se réfère tout d'abord à la **figure 1** sur laquelle est illustré un exemple de réalisation du disjoncteur DIS. Le disjoncteur DIS reçoit une alimentation principale par l'intermédiaire d'une liaison électrique LA en amont du disjoncteur.

Le disjoncteur DIS est destiné à protéger une ou plusieurs lignes électriques en aval. Ces lignes électriques peuvent être celles d'un réseau électrique de logement, telle que la ligne électrique LE. A titre d'exemple purement illustratif, la ligne électrique LE comporte deux câbles électriques C1 et C2 (correspondant typiquement à un câble phase et un câble neutre).

Le dispositif DIS comporte en outre :
- un organe de coupure OC ;
- un capteur de courant DET ;
- un capteur de diamètre DSC des câbles C1 et C2 :
- une interface homme-machine IHM ;
- une source lumineuse DEL (telle qu'une diode électroluminescente) ;
- une interface de communication INT ;
- une mémoire MEM ;
- une unité de traitement de données PROC ;
- un module électronique de surveillance CG ; et
- une unité d'alimentation électrique ALIM.

En vue de protéger la ligne électrique LE de potentiels dysfonctionnements électriques, l'organe de coupure OC comporte au moins :
- une position enclenchée dans laquelle les liaisons LE et LA sont connectées électriquement ; et
- une position déclenchée dans laquelle les liaisons LE et LA ne sont pas connectées électriquement.

L'organe de coupure OC est en mesure de rester en position enclenchée tant que le courant supporté au voisinage de la connexion des liaisons LE et LA n'excède pas la valeur du courant assigné du disjoncteur. Le courant assigné d peut typiquement être d'une valeur comprise entre 1 et 50A (plage de valeur généralement utilisée pour une installation électrique de logement).

L'organe OC peut notamment se déclencher (passage en position déclenchée) lorsque :
- le courant supporté est supérieur au courant assigné (au-delà de 10A par exemple), ce qui peut par exemple survenir lors d'un court-circuit sur la ligne LE ;
- le courant supporté dépasse un seuil déterminé par l'unité de traitement de données PROC (comme expliqué ci-après), typiquement lors d'une surconsommation sur la ligne LE ;
- une consigne de pilotage est exécutée par le disjoncteur (comme décrit plus loin).

L'unité de traitement de données PROC est en particulier adaptée pour comparer la valeur du diamètre des câbles C1 et C2 avec une valeur limite au-dessus de laquelle doivent se trouver les diamètres des câbles de la ligne LE pour être en adéquation avec le calibre du disjoncteur DIS.

A titre d'exemple purement illustratif, les câbles C1 et C2 doivent être d'un diamètre d'au moins 1,8 mm (correspondant à une section de câble d'environ 2,5 mm²) lorsque le calibre du disjoncteur DIS est de 16A.

A cet effet, le capteur DSC mesure le diamètre des câbles C1 et C2 et transmet la valeur mesurée à l'unité PROC.

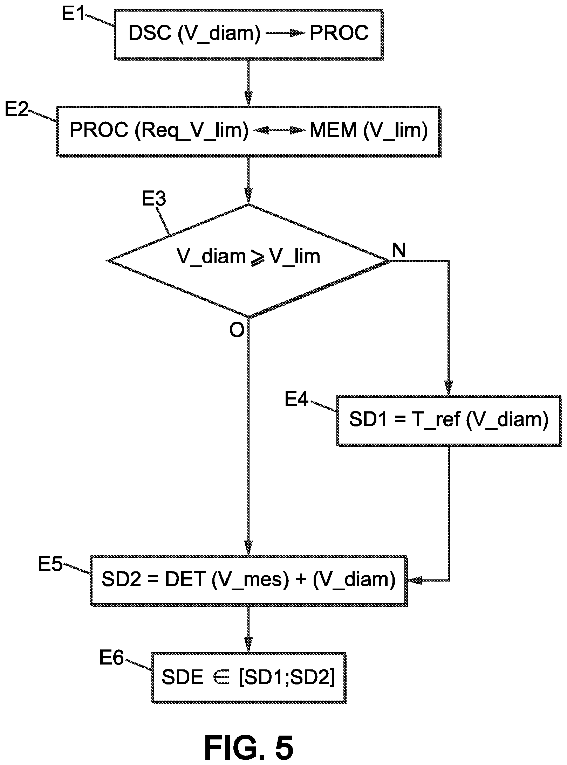

L'unité PROC peut être un processeur, un microcontrôleur, un circuit FPGA ou tout autre circuit électronique apte à traiter des données. L'unité PROC est notamment apte à mettre en oeuvre le procédé de contrôle (décrit plus loin relativement à la figure 5) du disjoncteur DIS lorsque les instructions d'un programme informatique destiné à être stocké dans une mémoire de l'installation électrique (typiquement la mémoire MEM) sont lues et exécutées par l'unité PROC.

L'unité PROC peut en particulier vérifier si le diamètre du câble est supérieur ou égale à la valeur limite imposée par le calibre du disjoncteur. Si c'est le cas, les câbles C1 et C2 possèdent effectivement des capacités électriques suffisantes pour supporter une intensité allant jusqu'à l'intensité du courant assigné du disjoncteur.

Ainsi, lors de l'installation du disjoncteur DIS, l'installateur peut s'assurer que le calibre du disjoncteur DIS concorde avec les capacités électriques du ou des câbles de la ligne LE et que l'installation électrique mise en place est sûre.

Dans l'exemple illustré, lorsque le diamètre des câbles C1 et C2 sont identiques et supérieur à la valeur limite.

Il peut être indiqué à l'installateur que les câbles sont de diamètre :
- suffisant via une lumière verte émise par la source DEL ; ou
- insuffisante via une lumière rouge émise par la source DEL.

D'autres réalisations sont possibles pour prévenir l'installateur ou le consommateur du résultat de la vérification effectuée par l'unité PROC. A ce titre, l'unité peut contrôler l'interface IHM pour afficher un message avec le résultat de la vérification (« Section câble valide » ou « Section câble non valide » par exemple) ou transmettre ce résultat au consommateur via l'interface de communication INT.

L'unité PROC peut affiner les conditions de déclenchement du disjoncteur DIS en calculant des seuils de déclenchement de coupure électrique de la ligne électrique à protéger. Les seuils peuvent être déterminés en fonction de données relatives à la configuration (diamètre de câble) et au comportement (consommations électriques) de la ligne LE.

A cet effet, l'unité PROC est adaptée à collecter :
- la valeur du diamètre mesuré par le capteur DSC d'une part ; et
- les données collectées par le capteur de courant DET d'autre part.

Le capteur DET est apte à mesurer le courant ainsi qu'une différence de potentiel sur la ligne LE, et plus particulièrement sur les câbles C1 et C2.

Le seuil de déclenchement de coupure électrique déterminé peut être une intensité à partir de laquelle le disjoncteur DIS se déclenche. Pour se faire, et selon un mode de réalisation possible, lorsque les données collectées par l'unité PROC révèlent que le courant mesuré par le capteur DET dépasse l'intensité du seuil déterminé, l'unité PROC peut contrôler l'organe OC pour un passage en position déclenchée.

Par ailleurs, le seuil de déclenchement peut en outre être déterminé par l'unité PROC selon une consigne de calibrage reçue via l'interface INT. A titre d'exemple, une unité de gestion du tableau électrique peut envoyer une consigne en vue de mettre à jour le calibrage des disjoncteurs. Cette consigne peut viser par exemple à augmenter le seuil de déclenchement du disjoncteur principal du tableau (lorsque le consommateur prescrit une puissance plus élevée auprès du fournisseur d'énergie par exemple).

Le seuil de déclenchement peut ainsi être contrôlé en fonction d'instructions reçues via l'interface INT. Une telle réalisation peut aussi permettre :
- au fournisseur d'énergie de brider le calibre des disjoncteurs lorsque le consommateur fait l'objet d'un défaut de paiement de ses factures ;
- à l'utilisateur de réguler sa consommation.

Il convient toutefois de noter que les seuils de déclenchement peuvent être déterminés relatifs selon des valeurs de courant qui sont inférieures ou égales à une valeur maximale correspondant :
- au courant assigné du disjoncteur d'une part ; ou
- d'autre part, à une valeur maximum imposée par la section du câble.

En effet, en vue de préserver en priorité la sécurité électrique de l'installation, le seuil de déclenchement est d'une intensité inférieure à celle que peut supporter les capacités électriques de la ligne à protéger et du disjoncteur.

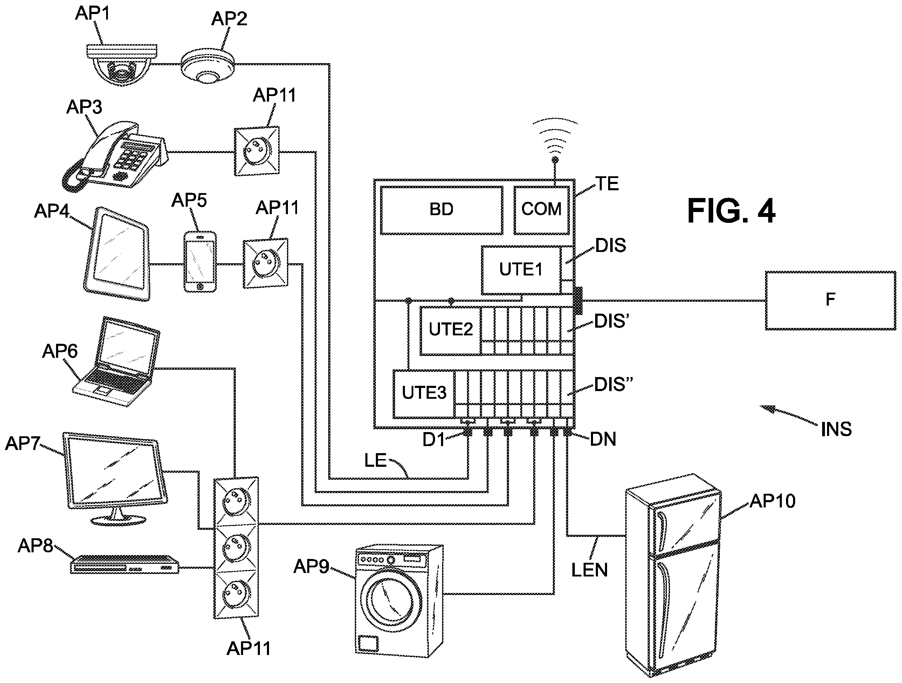

La mémoire MEM est adaptée à archiver des données collectées de chacun des capteurs. Les valeurs de diamètre, les données de courant et de différence de potentiel mesurées sont stockées durablement dans la mémoire MEM, qui est non-volatile (de type carte mémoire flash ou autre). Les données peuvent en outre être cycliquement dupliquées, par transmission des données via l'interface INT, vers une base de données distante (comme décrit ci-après en référence à la figure 4).

La mémoire MEM peut en outre archiver les valeurs des seuils de déclenchement déterminés ainsi qu'une table de référence comportant une ou plusieurs valeurs limites associées à différents diamètres de câbles étalons.

Les valeurs limites peuvent par exemple être prédéterminées en fonction d'un courant limite que peut supporter un câble ayant un diamètre donné, sans risque de dysfonctionnement électrique de celui-ci. La mémoire peut par ailleurs mémoriser des données de courant assigné relative au disjoncteur (définissant la valeur du calibre de ce dernier).

Lors du stockage des données des capteurs DET et DSC dans la mémoire MEM, les données archivées peuvent être identifiées et horodatées par exemple en vue de mettre en place des services de suivi des défaillances et/ou des consommations.

L'interface de communication INT permet d'envoyer et recevoir des données telles que des données de mesure ou des consignes de gestion/régulation du disjoncteur DIS. L'unité PROC est adaptée à transmettre la valeur dudit diamètre ou les données collectées par le ou les capteurs DET et/ou DSC. Aussi, à la réception d'une requête des données via l'interface INT, les données demandées peuvent être transmises à l'entité requérante, typiquement une unité de gestion d'un tableau électrique intelligent. L'interface de communication INT peut être:
- une interface Ethernet ;
- une interface radio ;
- une interface Wi-Fi ; ou
- toute autre interface permettant au consommateur ou un opérateur de consulter les informations collectées et archivées et/ou permettant un transfert de ces informations vers une unité de traitement distante, par exemple une unité de gestion de tableau électrique, un serveur distant ou un coffre-fort électronique.

L'interface de communication peut permettre d'émettre une alerte à destination du consommateur lorsque l'unité PROC détecte une anomalie de fonctionnement à partir des données collectées (typiquement une valeur inhabituelle par rapport aux valeurs mémorisées dans la mémoire MEM).

Le disjoncteur DIS peut en outre alerter de l'anomalie par l'intermédiaire d'un signal sonore ou lumineux émis par le disjoncteur, ou d'un message d'alerte affiché sur l'interface IHM.

Les alertes émises peuvent par exemple être liées à la détection de :
- une pluralité de câbles détectés avec des diamètres différents lors de la phase de mesure en diamètre par le capteur DSC ;
- déclenchement de l'organe OC du disjoncteur ;
- non fonctionnement d'un équipement ayant une consommation cyclique (typiquement un congélateur, réfrigérateur, chauffe-eau, etc.) ;
- non adéquation du calibre du disjoncteur au regard les usages électriques branchés à la ligne à protéger ; ou
- non adéquation du calibre du disjoncteur au regard du dimensionnement des câbles de la ligne à protéger.

Les alertes peuvent être horodatées à partir d'un module horloge de référence (horloge atomique) comportée par le disjoncteur pour synchroniser les échanges entre le disjoncteur et une centrale distante de gestion par exemple. Les alertes horodatées peuvent en outre être archivées dans la mémoire MEM.

Les données de consommation mesurées par le capteur DET et les alertes envoyées par le disjoncteur DIS permettent aux usagers de suivre, gérer et optimiser la consommation d'énergie de l'habitation et d'être prévenus de défaillances éventuelles.

En outre, l'interface INT permet de recevoir des consignes de pilotage du disjoncteur DIS pour que l'organe de coupure OC soit mis en position enclenchée ou déclenchée. Lorsque le consommateur reçoit une alerte de dysfonctionnement et que le disjoncteur a dès lors été déclenché, le consommateur est alors en mesure par exemple de commander le ré-enclenchement du disjoncteur via une consigne de pilotage. Selon un autre exemple, le consommateur peut envoyer une consigne de pilotage (typiquement à partir d'une application prévue à cet effet sur son Smartphone) au disjoncteur pour qu'il soit mis en position déclenchée pendant l'absence du consommateur dans le logement.

L'unité d'alimentation ALIM est connectée à la ligne LA en amont de l'organe de coupure OC de sorte à rester alimentée en électricité même lorsque le l'organe OC est en position déclenchée. L'unité ALIM permet d'alimenter les différentes composantes électroniques du disjoncteur DIS telles que l'unité PROC, la mémoire MEM et l'interface INT, et ce quelle que soit la position de l'organe OC.

Dans le cas d'un déclenchement du disjoncteur DIS, les équipements raccordés en aval, via la ligne LE, ne sont plus alimentés, mais l'unité PROC du disjoncteur reste quant à elle alimentée pour traiter le défaut et émettre une alerte.

En outre, l'unité d'alimentation électrique ALIM peut être prévue pour se comporter tel un régulateur d'alimentation électrique contrôlé par l'unité PROC de sorte à :
- réguler une puissance électrique reçue en aval du disjoncteur via la ligne LA, et
- alimenter la ligne électrique LE en aval selon la puissance électrique régulée.

De cette manière, la puissance électrique reçue peut être adaptée sur la ligne électrique LE en fonction du diamètre des câbles C1 et C2 de sorte à ce que la puissance régulée soit en adéquation avec les capacités électriques de la ligne LE en aval du disjoncteur.

Le module électronique de surveillance CG du fonctionnement de l'unité de traitement peut interroger régulièrement selon un cycle prédéterminé (toutes les minutes par exemple) l'unité PROC. Si pendant un ou plusieurs cycles l'unité PROC ne répond pas aux interrogations du module CG, le module CG est en mesure de contrôler l'organe OC pour déclencher le disjoncteur DIS. Cette mesure de sécurité permet de couper l'alimentation électrique sur la ligne LE en aval du disjoncteur afin de se prémunir de tout dysfonctionnement lorsque l'unité PROC ne fonctionne plus.

Le consommateur peut aussi agir manuellement sur l'organe de coupure OC en local ou peut agir à distance (par envoi de consigne de pilotage).

Le capteur de diamètre DSC des câbles électriques C1 et C2 est par exemple un dispositif laser qui se présente sous la forme d'une succession d'ouvertures juxtaposées et de tailles différentes, auxquelles sont respectivement associées des faisceaux lasers traversant chacune des ouvertures (formant une barrière laser par exemple).

Ces dispositifs laser peuvent détecter la présence de câbles insérés dans au moins une des ouvertures. Les ouvertures correspondent à des gabarits de câbles prédéfinis. Lorsque l'installateur installe le câble dans le gabarit le plus approprié aux câbles C1 et C2, le diamètre de câble mesuré correspond au gabarit de l'ouverture pour lequel le capteur DSC détecte une présence de câble. Le diamètre mesuré correspond à une valeur de section du câble permettant de déterminer les capacités électriques de ce dernier.

A titre d'exemple, le capteur DSC comporte quatre ouvertures de diamètres de 1,4 ; 1,8 ; 2,8 et 3,6 mm qui correspondent respectivement à des sections d'environ 1,5, 2,5, 6 et 10 mm². Typiquement, pour un disjoncteur de courant assigné de 16A, la valeur limite peut être une section de câble de 2,5 mm², correspondant sensiblement à un diamètre de 1,8 mm.

On se réfère maintenant à la **figure 2** sur laquelle on a représenté un autre exemple de réalisation du disjoncteur, et en particulier, une autre réalisation de dispositif laser pour mesurer le diamètre des câbles C1 et C2.

Ici, le capteur DSC mesure le diamètre par l'intermédiaire d'une impulsion laser émise par une ou plusieurs sources laser SL. Les sources lasers sont en mesure de capter le retour de l'impulsion laser et de déterminer à partir de l'écart temps entre l'impulsion laser émise et son retour, la taille des câbles insérés dans le disjoncteur DIS. Cette réalisation permet de mesurer précisément et directement le diamètre des câbles C1 et C2.

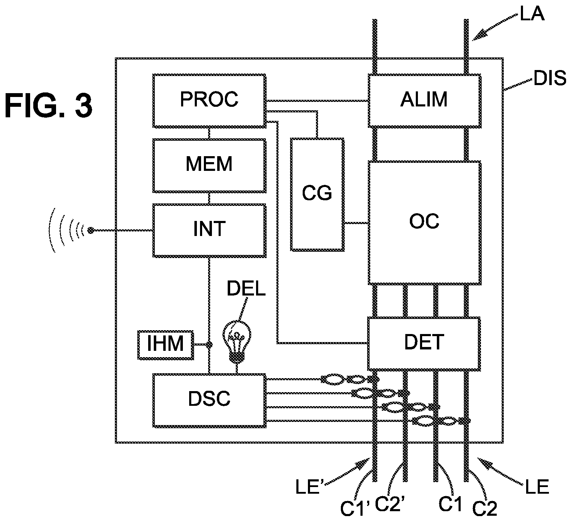

A la **figure 3****,** on a illustré un autre exemple de réalisation dans lequel le disjoncteur DIS protège deux lignes électriques LE et LE', chacune comprenant deux câbles électriques (un câble pour la phase, un câble neutre). Dans cette réalisation, les diamètres de chacun des câbles sont mesurés et comparés.

En effet, pour que l'installation électrique soit correcte, il convient que les câbles d'une même ligne électrique LE, LE' soit de diamètre sensiblement identique. Pour la ligne LE, l'unité PROC récupère la valeur de diamètre des câbles C1 et C2. Pour la ligne LE', l'unité PROC récupère la valeur de diamètre de chacun des câbles C1' et C2'. L'unité compare le diamètre de C1 avec C2 et de C1' avec C2'. Si les diamètres ne concordent pas entre C1 et C2, et/ou entre C1' et C2', le disjoncteur DIS émet une alerte pour prévenir de l'anomalie.

On se réfère maintenant à la **figure 4** sur laquelle on a illustré un exemple d'installation électrique INS comprenant un tableau électrique TE.

Le tableau TE peut comporter des départs D1 à DN qui sont respectivement connectés à une ou plusieurs lignes électriques LE1 à LEN à alimenter en électricité. Afin de protéger ces lignes électriques, un ou plusieurs des disjoncteurs DIS susmentionnés ou des rangées de tels disjoncteurs DIS', DIS", sont disposés au sein du tableau TE.

Ces disjoncteurs sont, en amont des départs D1 à DN, associés aux lignes LE1 à LEN. Les disjoncteurs peuvent recevoir une alimentation électrique principale via des lignes électriques en amont (non représentée sur cette figure), procurant par exemple une énergie électrique en provenance d'un fournisseur F.

Les lignes LE1 à LEN peuvent notamment être adaptées à alimenter électriquement des appareils qui y sont branchés, comme par exemple les appareils AP1 à AP11 qui peuvent être :
- des équipements multimédia (AP1 à AP8 par exemple) ;
- des équipements électriques tels que des prises ou multiprises (AP11) ;
- des équipements électroménagers tels qu'un réfrigérateur, une machine à laver, ou un congélateur (AP9 et AP10 typiquement) ;
- ou autre.

Pour des raisons de clarté de la figure, seuls les départs D1 à DN de la rangée basse de disjoncteurs DIS" ont été représentés. Il convient toutefois de noter que des départs pour chacun des disjoncteurs ou pour des groupes de disjoncteurs du tableau TE peuvent être prévus.

Le tableau TE comporte en outre au moins une unité de gestion, telles que les unités de gestion UTE1, UTE2 et UTE3. Ces unités UTE1, UTE2, UTE3 peuvent échanger des données avec les unités PROC des disjoncteurs DIS, DIS' et DIS", notamment via leur interface INT. De cette manière, les disjoncteurs DIS du tableau TE peuvent recevoir des consignes de pilotage issues des unités UTE1, UTE2, UTE3.

A cet effet, le disjoncteur peut disposer d'un numéro d'identification (une adresse IP par exemple) permettant aux unités UTE1, UTE2, UTE3 d'identifier la provenance et/ou la destination des données échangées avec les disjoncteurs.

Les données collectées par les disjoncteurs électroniques et archivées dans leur mémoire MEM peuvent être communiquées (cycliquement par exemple) aux unités de gestion du tableau TE qui collectent et archivent durablement les données de l'ensemble des disjoncteurs électroniques du tableau. A ce titre, le tableau TE comporte une base de données BD. La base BD peut être tout support apte à enregistrer des données numériques de manière pérenne. A titre d'exemple, un tel moyen de stockage peut être un disque SSD à mémoire flash.

Les unités UTE1, UTE2, UTE3 peuvent être aptes à commander le stockage des données et à sécuriser les données stockées via des moyens d'authentification et/ou d'encodage crypté.

Selon une réalisation possible, les données collectées et archivées dans la base BD peuvent être dupliquées automatiquement dans un coffre fort électronique sécurisé avec une fréquence déterminée selon un paramétrage du consommateur.

Les mesures en courant de chaque disjoncteur du tableau électrique permettent de recueillir des informations de consommation détaillées. Ces informations permettent au consommateur de se sensibiliser, de gérer et d'optimiser sa consommation d'énergie dans le logement et d'avoir accès à un bilan détaillé de la consommation électrique inhérente aux appareils connectés.

Le consommateur peut de surcroit être prévenu de toute défaillance détectée telle qu'un diamètre de câble inadapté ou un déclenchement de disjoncteur.

Lorsqu'un appareil est débranché de la ligne LE, il peut être prévu d'envoyer un message d'alerte à l'unité PROC ou aux unités UTE1, UTE2, UTE3 de sorte à commander le disjoncteur DIS afin de limiter la valeur du seuil de déclenchement ou de déclencher l'organe OC.

Le tableau peut comporter en outre un module de communication COM destiné à communiquer les données collectées par les unités de gestion UTE1, UTE2 et UTE3 et/ou archivées sur la base de données BD du tableau TE. Les unités UTE1, UTE2, UTE3 peuvent à ce titre mettre en forme et communiquer les données transmises par les disjoncteurs.

Par l'intermédiaire du module de communication COM, les unités UTE1, UTE2, UTE3 peuvent en outre relayer des alertes reçues des disjoncteurs vers un système informatique distant et/ou vers le consommateur.

On se réfère maintenant à la **figure 5** sur laquelle un organigramme représente un exemple d'une succession d'étapes du procédé de contrôle du disjoncteur proposé.

Selon une étape E1, l'unité PROC du disjoncteur reçoit une valeur du diamètre V_diam d'un câble de la ligne LE, mesurée par le capteur de diamètre DSC.

Dans une étape E2, l'unité PROC consulte une valeur limite V_lim archivée au préalable dans la mémoire MEM du disjoncteur (via une requête Req_V_lim adressée à la mémoire MEM par exemple). La valeur V_lim peut être une valeur de diamètre minimum requise par le calibre du disjoncteur. Cette valeur V_lim peut être définie dès la fabrication du disjoncteur en fonction du courant assigné qui peut être supporté ou peut être mise à jour par l'unité PROC.

Selon une étape E3, l'unité PROC vérifie que la valeur du diamètre V_diam est supérieure ou égale à la valeur limite V_lim déterminée à partir du courant assigné (i.e. calibre) du disjoncteur.

Selon la flèche N en sortie de la vérification de l'étape E3, la valeur V_diam n'est pas supérieure à V_lim, auquel cas il convient de limiter le seuil de déclenchement selon le diamètre du câble, et ce de sorte à ce que le disjoncteur soit calibré en fonction des capacités électriques effectives des câbles.

A cet effet, selon une étape E4, l'unité PROC détermine, en fonction de la valeur V_diam, un premier seuil SD1 de déclenchement de coupure électrique. L'unité PROC peut consulter par exemple une table de référence T_ref stockée dans la mémoire MEM, laquelle table T_ref comprend des niveaux de seuil de déclenchements en fonction de différentes valeurs étalons de diamètre.

Selon la flèche O en sortie de la vérification de l'étape E3 (V_lim supérieure ou égale à V_diam) ou à l'issue de l'étape E4, l'unité PROC collecte de données V_mes issues du capteur de courant DET lors d'une étape E5. Les données V_mes sont des données relatives notamment à un courant et une différence de potentiel mesurés sur la ligne LE. L'unité PROC peut ensuite déterminer un deuxième seuil SD2 de déclenchement de coupure électrique en fonction des données collectées V_mes et de la valeur de diamètre du câble V_diam.

Selon une étape E6 optionnelle, l'unité PROC peut en outre déterminer une plage de fonctionnement du disjoncteur. Cette plage de fonctionnement peut être comprise entre le premier seuil SD1 et le deuxième seuil SD2. Un seuil de déclenchement effectif SDE est alors déterminé par l'unité PROC dans la plage déterminée. Le disjoncteur est dès lors paramétré pour se déclencher uniquement (sans tenir compte des seuils SD1 et SD2) en fonction du seuil effectif SDE.

De cette manière, les seuils de déclenchement SD1, SD2 et SDE permettent d'ajuster la protection électrique assurée par le disjoncteur en fonction des caractéristiques électriques de la ligne à protéger. Il est ainsi possible de maintenir les performances électriques du disjoncteur, de l'installation et des équipements associés par l'auto-adaptation du calibre du disjoncteur dans une plage appropriée en fonction de la section du câble aval.

Le procédé peut comprendre en outre d'autres étapes optionnelles non illustrées sur la figure telles que :
- la réception d'une consigne de calibrage via l'interface INT ;
- la détermination du seuil SD1 ou SD2 en fonction de la consigne de calibrage ;
- surveillance de la valeur de diamètre V_diam et des données collectées V_mes pour détecter des anomalies de fonctionnement ; et
- émission d'une alerte en cas d'anomalie détectée.

Différentes phases de vérification peuvent être mises en oeuvre par un installateur de sorte à obtenir une installation sûre du disjoncteur.

Par exemple, lors d'une phase d'initiation, aucun câble n'est inséré dans le disjoncteur. La valeur de diamètre du câble est initialisée à zéro et l'organe de coupure est placé dans une position déclenchée (circuit ouvert).

Ensuite, lors de la phase d'insertion du câble, l'installateur peut utiliser l'interface IHM du disjoncteur pour procéder à une mesure de diamètre du câble inséré (appui sur un bouton pour lancer les mesures par exemple). Le câble est dès lors détecté et mesuré par le capteur DSC, lequel capteur transmet la valeur de diamètre à l'unité PROC pour vérifier cette dernière. La valeur de diamètre mesurée peut en outre être archivée dans la mémoire MEM. En fonction du diamètre, le calibre du disjoncteur peut être automatiquement calibré (selon les étapes E4 et/ou E5 susmentionnées notamment).

Une fois que la phase d'insertion est terminée et que le disjoncteur est correctement calibré en fonction du câble, l'organe de coupure peut être placé en toute sécurité en position enclenchée (circuit fermé) et de là, protéger efficacement la ligne électrique.

Selon une autre réalisation possible, le capteur DSC est installé à l'écart de la ligne électrique LE. L'installateur peut alors mesurer dans un premier temps la taille du câble via le capteur DSC, auto-calibrer le disjoncteur selon cette taille dans un deuxième temps, puis insérer le câble par vissage dans un emplacement du disjoncteur destiné à recevoir un câble à protéger.

L'installateur peut en outre configurer le disjoncteur avant l'installation chez un consommateur, par exemple en paramétrant les voies de mesure en fonction du calibre du disjoncteur (1A ; 10A ; 16A ; etc.) et de l'équipement raccordé (four, prise de courant, lumière, etc.).

Aussi, compte-tenu de ce qui précède, on comprend que le disjoncteur proposé et le procédé de contrôle correspondant d'un tel disjoncteur, permettent de personnaliser la sécurité électrique d'une installation en fonction des équipements qui composent celle-ci et de la section des câbles.

En effet, le disjoncteur permet notamment de résoudre différents problèmes de sécurité tels que :
- la non adéquation de la section des câbles raccordés à l'aval du disjoncteur avec son calibre ;
- un seuil de déclenchement inadapté par rapport aux usages électriques de la ligne protégée (entrainant habituellement une la latence de déclenchement du disjoncteur) ;
- mauvaise association du câble avec le disjoncteur ; et
- mauvais calibrage par rapport au contrat du consommateur.

Le disjoncteur améliore donc significativement la sécurité des biens et des personnes, pouvant servir en outre de plateforme pour la mise en oeuvre de services dans le logement.

L'invention a été décrite en référence à des modes de réalisations particuliers qui ne sont pas limitatifs. Bien entendu, la présente invention ne se limite pas à la forme de réalisation décrite à titre d'exemple et elle s'étend à d'autres variantes. Notamment, le nombre et la nature des capteurs peuvent varier selon les applications, ainsi que les modes de transmission et de consultation des données collectées.

## Revendications

1. Disjoncteur (DIS) pour la protection d'au moins une ligne électrique (LE) comportant au moins un câble électrique (C1, C2), **caractérisé en ce qu'**il comporte au moins :
- un capteur de diamètre (DSC) du câble électrique ; et
- une unité de traitement de données (PROC) reliée au capteur de diamètre pour recevoir une valeur dudit diamètre,
ladite unité de traitement étant apte à vérifier que la valeur dudit diamètre est supérieure ou égale à une valeur limite déterminée à partir d'un courant assigné dudit disjoncteur.

2. Disjoncteur (DIS) selon la revendication 1, **caractérisé en ce que** ladite unité de traitement (PROC) est en outre apte à déterminer, en fonction de la valeur dudit diamètre, un premier seuil (SD1) de déclenchement de coupure électrique de la ligne à protéger.

3. Disjoncteur (DIS) selon la revendication 2, **caractérisé en ce qu'**il comporte en outre un capteur de courant (DET) adapté à mesurer un courant et une différence de potentiel sur ladite ligne électrique (LE), l'unité de traitement (PROC) étant en outre apte à collecter des données issues dudit capteur de courant et à déterminer un deuxième seuil (SD2) de déclenchement de coupure électrique en fonction desdites données collectées et de la valeur de diamètre du câble.

4. Disjoncteur (DIS) selon l'une des revendications précédentes, **caractérisé en ce qu'**il comporte en outre au moins une mémoire (MEM) adaptée à archiver des données collectées de chacun desdits capteurs (DSC, DET).

5. Disjoncteur (DIS) selon l'une des revendications précédentes, **caractérisé en ce qu'**il comporte en outre au moins une interface de communication (INT), l'unité de traitement (PROC) étant adaptée à transmettre, sur requête, via l'interface de communication, la valeur dudit diamètre ou lesdites données collectées par le ou les capteurs (DSC, DET).

6. Disjoncteur (DIS) selon la revendication 5, **caractérisé en ce que** ladite unité de traitement (PROC) est apte à déterminer ledit au moins un seuil (SD1, SD2) de déclenchement de coupure électrique de la ligne à protéger en fonction d'une consigne de calibrage reçue via l'interface de communication (INT).

7. Disjoncteur (DIS) selon l'une des revendications 5 ou 6, **caractérisé en ce qu'**il est enclenché ou déclenché sur réception d'une consigne de pilotage reçue via ladite interface de communication (INT).

8. Disjoncteur (DIS) selon l'une des revendications précédentes, **caractérisé en ce qu'**il comporte en outre une unité d'alimentation électrique (ALIM) contrôlée par l'unité de traitement (PROC), ladite unité d'alimentation électrique étant adaptée pour :
- réguler une puissance électrique reçue, et
- alimenter ladite ligne électrique (LE) à protéger selon la puissance électrique régulée.

9. Disjoncteur (DIS) selon l'une des revendications précédentes, **caractérisé en ce que**, lorsque que ladite unité de traitement (PROC) est hors service, un module électronique de surveillance (CG) du fonctionnement de ladite unité de traitement déclenche le disjoncteur.

10. Disjoncteur (DIS) selon l'une des revendications précédentes, **caractérisé en ce que** l'unité de traitement (PROC) est en outre adaptée pour :
- détecter des anomalies de fonctionnement à partir de la valeur ou des données collectées ; et
- émettre une alerte.

11. Disjoncteur (DIS) selon l'une des revendications précédentes, **caractérisé en ce que** le capteur de diamètre du câble est un dispositif laser.

12. Installation électrique (INS) comprenant au moins un disjoncteur (DIS) selon l'une des revendications précédentes.

13. Procédé de contrôle d'un disjoncteur (DIS) pour la protection d'au moins une ligne électrique (LE) comportant au moins un câble électrique (C1, C2), **caractérisé en ce qu'**il comporte au moins les étapes de :
- collecte (E1) de données issues d'un capteur de diamètre (DSC) du câble électrique ; et
- vérification (E3) que la valeur dudit diamètre est supérieure ou égale à une valeur limite déterminée à partir d'un courant assigné dudit disjoncteur.

14. Procédé de contrôle selon la revendication 13, **caractérisé en ce qu'**il comporte en outre une étape de détermination (E4), en fonction de la valeur dudit diamètre, d'un premier seuil (SD1) de déclenchement de coupure électrique de ladite ligne à protéger.

15. Procédé de contrôle selon l'une des revendications 13 ou 14, **caractérisé en ce qu'**il comporte en outre les étapes de :
- collecte de données issues d'un capteur de courant (DET) mesurant un courant et une différence de potentiel sur ladite ligne électrique (LE) ; et
- détermination (E5) d'un deuxième seuil (SD2) de déclenchement de coupure électrique en fonction desdites données collectées et de la valeur de diamètre du câble.

16. Procédé de contrôle selon les revendications 13 à 15, **caractérisé en ce qu'**il comporte en outre une étape de détermination (E6) d'une plage de fonctionnement du disjoncteur, ladite plage de fonctionnement étant comprise entre :
- ledit premier seuil (SD1) ; et
- ledit deuxième seuil (SD2) ;
un seuil de déclenchement effectif (SDE) étant déterminé dans ladite plage de fonctionnement.

17. Procédé de contrôle selon l'une des revendications 14 ou 15, **caractérisé en ce qu'**il comporte en outre les étapes de :
- réception d'une consigne de calibrage via une interface de communication (INT) du disjoncteur ; et
- détermination dudit seuil de déclenchement (SD1, SD2) de coupure électrique en fonction de ladite consigne de calibrage.

18. Procédé de contrôle selon l'une des revendications 13 à 17, **caractérisé en ce qu'**il comporte en outre les étapes de :
- surveillance de la valeur de diamètre et des données collectées pour détecter des anomalies de fonctionnement ; et
- émission d'une alerte en cas d'anomalie détectée.

19. Programme informatique destiné à être stocké dans une mémoire (MEM) d'un disjoncteur, **caractérisé en ce qu'**il comporte des instructions lisibles par un processeur dudit disjoncteur, ledit processeur mettant en oeuvre le procédé selon l'une des revendications 13 à 18 lorsque lesdites instructions sont exécutées par ledit processeur.

## Patentansprüche

1. Schutzschalter (DIS) für den Schutz von mindestens einer elektrischen Leitung (LE), umfassend mindestens ein Stromkabel (C1, C2), **dadurch gekennzeichnet, dass** er mindestens Folgendes aufweist:
- einen Durchmessersensor (DSC) des Stromkabels und
- eine Datenverarbeitungseinheit (PROC), die mit dem Durchmessersensor verbunden ist, um einen Wert des Durchmessers zu empfangen,
wobei die Verarbeitungseinheit geeignet ist, zu überprüfen, dass der Wert des Durchmessers größer als oder gleich ein(em) Grenzwert ist, der ausgehend von einem Bemessungsstrom des Schutzschalters bestimmt wird.

2. Schutzschalter (DIS) nach Anspruch 1, **dadurch gekennzeichnet, dass** die Verarbeitungseinheit (PROC) ferner geeignet ist, in Abhängigkeit von dem Wert des Durchmessers einen ersten Schwellenwert (SD1) zum Auslösen der Stromunterbrechung der zu schützenden Leitung zu bestimmen.

3. Schutzschalter (DIS) nach Anspruch 2, **dadurch gekennzeichnet, dass** er ferner einen Stromsensor (DET) aufweist, der geeignet ist, einen Strom und eine Potentialdifferenz auf der elektrischen Leitung (LE) zu messen, wobei die Verarbeitungseinheit (PROC) ferner geeignet ist, Daten zu sammeln, die von dem Stromsensor stammen, und einen zweiten Schwellenwert (SD2) zum Auslösen der Stromunterbrechung in Abhängigkeit von den gesammelten Daten und von dem Wert des Durchmessers des Kabels zu bestimmen.

4. Schutzschalter (DIS) nach einem der vorhergehenden Ansprüche, **dadurch gekennzeichnet, dass** er ferner mindestens einen Speicher (MEM) aufweist, der geeignet ist, die gesammelten Daten von jedem der Sensoren (DSC, DET) zu archivieren.

5. Schutzschalter (DIS) nach einem der vorhergehenden Ansprüche, **dadurch gekennzeichnet, dass** er ferner mindestens eine Kommunikationsschnittstelle (INT) aufweist, wobei die Verarbeitungseinheit (PROC) geeignet ist, auf Anfrage über die Kommunikationsschnittstelle den Wert des Durchmessers oder die Daten, die von dem oder den Sensoren (DSC, DET) gesammelt werden, zu übertragen.

6. Schutzschalter (DIS) nach Anspruch 5, **dadurch gekennzeichnet, dass** die Verarbeitungseinheit (PROC) geeignet ist, den mindestens einen Schwellenwert (SD1, SD2) zum Auslösen der Stromunterbrechung der zu schützenden Leitung in Abhängigkeit von einem Kalibrierungssollwert, der über die Kommunikationsschnittstelle (INT) empfangen wird, zu bestimmen.

7. Schutzschalter (DIS) nach einem der Ansprüche 5 oder 6, **dadurch gekennzeichnet, dass** er nach Empfangen eines Steuersollwertes, der über die Kommunikationsschnittstelle (INT) empfangen wird, eingeschaltet oder ausgeschaltet wird.

8. Schutzschalter (DIS) nach einem der vorhergehenden Ansprüche, **dadurch gekennzeichnet, dass** er ferner mindestens eine Stromversorgungseinheit (ALIM) aufweist, die von der Verarbeitungseinheit (PROC) gesteuert wird, wobei die Stromversorgungseinheit geeignet ist, um:
- eine empfangene elektrische Leistung zu regeln und
- die zu schützende elektrische Leitung (LE) nach der geregelten elektrischen Leistung zu speisen.

9. Schutzschalter (DIS) nach einem der vorhergehenden Ansprüche, **dadurch gekennzeichnet, dass**, wenn die Verarbeitungseinheit (PROC) außer Betrieb ist, ein elektronisches Überwachungsmodul (CG) des Betriebs der Verarbeitungseinheit den Schutzschalter ausschaltet.

10. Schutzschalter (DIS) nach einem der vorhergehenden Ansprüche, **dadurch gekennzeichnet, dass** die Verarbeitungseinheit (PROC) ferner geeignet ist, um:
- Funktionsstörungen ausgehend von dem Wert oder den gesammelten Daten zu erfassen und
- einen Alarm auszugeben.

11. Schutzschalter (DIS) nach einem der vorhergehenden Ansprüche, **dadurch gekennzeichnet, dass** der Durchmessersensor des Kabels eine Laservorrichtung ist.

12. Elektrische Anlage (INS), umfassend mindestens einen Schutzschalter (DIS) nach einem der vorhergehenden Ansprüche.

13. Verfahren zur Steuerung eines Schutzschalters (DIS) für den Schutz von mindestens einer elektrischen Leitung (LE), umfassend mindestens ein Stromkabel (C1, C2), **dadurch gekennzeichnet, dass** es mindestens die folgenden Schritte aufweist:
- Sammeln (E1) von Daten, die von einem Durchmessersensor (DSC) des Stromkabels stammen, und
- Überprüfen (E3), dass der Wert des Durchmessers größer als oder gleich einem Grenzwert ist, der ausgehend von einem Bemessungsstrom des Schutzschalters bestimmt wird.

14. Verfahren zur Steuerung nach Anspruch 13, **dadurch gekennzeichnet, dass** es ferner einen Schritt des Bestimmens (E4) in Abhängigkeit von dem Wert des Durchmessers eines ersten Schwellenwertes (SD1) zum Auslösen der Stromunterbrechung der zu schützenden Leitung aufweist.

15. Verfahren zur Steuerung nach einem der Ansprüche 13 oder 14, **dadurch gekennzeichnet, dass** es ferner die folgenden Schritte aufweist:
- Sammeln von Daten, die von einem Stromsensor (DET) stammen, der einen Strom und eine Potentialdifferenz auf der elektrischen Leitung (LE) misst, und
- Bestimmen (E5) eines zweiten Schwellenwertes (SD2) zum Auslösen der Stromunterbrechung in Abhängigkeit von den gesammelten Daten und von dem Wert des Durchmessers des Kabels.

16. Verfahren zur Steuerung nach den Ansprüchen 13 bis 15, **dadurch gekennzeichnet, dass** es ferner einen Schritt des Bestimmens (E6) eines Betriebsbereiches des Schutzschalters aufweist, wobei der Betriebsbereich zwischen:
- dem ersten Schwellenwert (SD1) und
- dem zweiten Schwellenwert (SD2) liegt,
wobei ein effektiver Schwellenwert zum Auslösen (SDE) in dem Betriebsbereich bestimmt wird.

17. Verfahren zur Steuerung nach einem der Ansprüche 14 oder 15, **dadurch gekennzeichnet, dass** es ferner die folgenden Schritte aufweist:
- Empfangen eines Kalibrierungssollwertes über eine Kommunikationsschnittstelle (INT) des Schutzschalters und
- Bestimmen des Schwellenwertes (SD1, SD2) zum Auslösen der Stromunterbrechung in Abhängigkeit von dem Kalibrierungssollwert.

18. Verfahren zur Steuerung nach einem der Ansprüche 13 bis 17, **dadurch gekennzeichnet, dass** es ferner die folgenden Schritte aufweist:
- Überwachen des Wertes des Durchmessers und der gesammelten Daten, um Funktionsstörungen zu erfassen und
- Ausgeben eines Alarms im Falle von einer erfassten Funktionsstörung.

19. Computerprogramm, das dazu bestimmt ist, in einem Speicher (MEM) eines Schutzschalters gespeichert zu werden, **dadurch gekennzeichnet, dass** es Anweisungen aufweist, die durch einen Prozessor des Schutzschalters lesbar sind, wobei der Prozessor das Verfahren nach einem der Ansprüche 13 bis 18 umsetzt, wenn die Anweisungen von dem Prozessor ausgeführt werden.

## Claims

1. A circuit breaker (DIS) for the protection of at least one power line (LE) comprising at least one electrical cable (C1, C2), **characterized in that** it comprises at least:
- an electrical cable diameter sensor (DSC); and
- a data processing unit (PROC) connected to the diameter sensor for receiving a value of said diameter,
said processing unit being capable of verifying that the value of said diameter is greater than or equal to a limit value determined from an assigned current of said circuit breaker.

2. The circuit breaker (DIS) as claimed in claim 1, **characterized in that** said processing unit (PROC) is further capable of determining, according to the value of said diameter, a first threshold (SD1) for tripping an electrical cut-out of the line to be protected.

3. The circuit breaker (DIS) as claimed in claim 2, **characterized in that** it further comprises a current sensor (DET) suitable for measuring a current and a potential difference on said electrical line (LE), the processing unit (PROC) being further capable of collecting data from said current sensor and determining a second threshold (SD2) for tripping an electrical cut-out according to said collected data and the diameter value of the cable.

4. The circuit breaker (DIS) as claimed in one of the preceding claims, **characterized in that** it further includes at least one memory (MEM) suitable for archiving data collected from each of said sensors (DSC, DET).

5. The circuit breaker (DIS) as claimed in one of the preceding claims, **characterized in that** it further comprises at least one communication interface (INT), the processing unit (PROC) being suitable for transmitting, on request, via the communication interface, the value of said diameter or said data collected by the sensor or sensors (DSC, DET).

6. The circuit breaker (DIS) as claimed in claim 5, **characterized in that** said processing unit (PROC) is capable of determining said at least one threshold (SD1, SD2) for tripping an electrical cut-out of the line to be protected according to a calibration instruction received via the communication interface (INT).

7. The circuit breaker (DIS) as claimed in one of claims 5 or 6, **characterized in that** it is engaged or tripped on receiving a control instruction received via said communication interface (INT).

8. The circuit breaker (DIS) as claimed in one of the preceding claims, **characterized in that** it further comprises an electrical power supply unit (ALIM) controlled by the processing unit (PROC), said electrical power supply unit being suitable for:
- regulating an electrical power received, and
- supplying said electrical line (LE) to be protected according to the regulated electrical power.

9. The circuit breaker (DIS) as claimed in one of the preceding claims, **characterized in that**, when said processing unit (PROC) is out of service, an electronic module (CG) for monitoring the operation of said processing unit trips the circuit breaker.

10. The circuit breaker (DIS) as claimed in one of the preceding claims, **characterized in that** the processing unit (PROC) is further suitable for:
- detecting operating anomalies from the diameter value or the collected data; and
- emitting a warning.

11. The circuit breaker (DIS) as claimed in one of the preceding claims, **characterized in that** the cable diameter sensor is a laser device.

12. An electrical installation (INS) including at least one circuit breaker (DIS) as claimed in one of the preceding claims.

13. A method of controlling a circuit breaker (DIS) for the protection of at least one electrical line (LE) comprising at least one electrical cable (C1, C2), **characterized in that** it comprises at least the steps of:
- collecting (E1) data from an electrical cable diameter sensor (DSC); and
- verifying (E3) that the value of said diameter is greater than or equal to a limit value determined from an assigned current of said circuit breaker.

14. The control method as claimed in claim 13, **characterized in that** it further comprises a step of determining (E4), according to the value of said diameter, a first threshold (SD1) for tripping an electrical cut-out of said line to be protected.

15. The control method as claimed in one of claims 13 or 14, **characterized in that** it further comprises the steps of:
- collecting data from a current sensor (DET) measuring a current and a potential difference on said electrical line (LE); and
- determining (E5) a second threshold (SD2) for tripping an electrical cut-out according to said collected data and the diameter value of the cable.

16. The control method as claimed in claims 13 through 15, **characterized in that** it further comprises a step of determining (E6) an operating range of the circuit breaker, said operating range being included between:
- said first threshold (SD1); and
- said second threshold (SD2);
an effective tripping threshold (SDE) being determined in said operating range.

17. The control method as claimed in one of claims 14 or 15, **characterized in that** it further comprises the steps of:
- receiving a calibration instruction via a communication interface (INT) of the circuit breaker; and
- determining said threshold for tripping (SD1, SD2) an electrical cut-out according to said calibration instruction.

18. The control method as claimed in one of claims 13 through 17, **characterized in that** it further comprises the steps of:
- monitoring the diameter value and data collected for detecting operating anomalies; and
- emitting a warning in the event of a detected anomaly.

19. A computer program intended to be stored in a memory (MEM) of a circuit breaker, **characterized in that** it comprises instructions readable by a processor of said circuit breaker, said processor implementing the method according to one of claims 13 through 18 when said instructions are executed by said processor.
